Europäisches Patentamt

**European Patent Office**

Office européen des brevets

(11) Publication number: **0 268 799**
**B1**

(12) **EUROPEAN PATENT SPECIFICATION**

(45) Date of publication of the patent specification:
**11.10.89**

(21) Application number: **87114826.8**

(22) Date of filing: **10.10.87**

(51) Int. Cl.⁴: **F16H 55/17**, F16H 55/06,
B29D 15/00

(54) **A driving wheel with a belt pulley.**

(30) Priority: **27.10.86 SE 8604570**

(43) Date of publication of application:
**01.06.88 Bulletin 88/22**

(45) Publication of the grant of the patent:
**11.10.89 Bulletin 89/41**

(84) Designated Contracting States:
**DE FR GB IT**

(56) References cited:
**DE-U- 1 774 617**
**FR-A- 1 030 239**
**FR-A- 2 470 308**
**US-A- 2 971 356**
**US-A- 3 237 480**
**US-A- 3 733 921**

(73) Proprietor: **SKF Nova AB, S-415 50 Göteborg(SE)**

(72) Inventor: **Hallerbäck, Stig, Blodboksgatan 12,
S-421 74 Västra Frölunda(SE)**

(74) Representative: **Kristiansen, Alf P. et al, Aktiebolaget
SKF Patent Department, S-415 50 Göteborg(SE)**

ACTORUM AG

## Description

The present invention refers to driving wheels with belt pulley, particularly such as used in connection with car engines.

A large number of different driving wheels with pulley are earlier known. They are usually mounted at the front of an engine upon a protruding drive shaft. The driving wheels commonly cooperate with driving belts for driving further devices such as a dynamo. The driving wheels are subjected to high requirements. They shall be reliable under different temperature conditions and the requirements are high for accuracy, as transferred motions shall be synchronized with each other.

The driving wheels generally consist of a gear wheel with ledge-shaped, axially directed cogs and a sheet metal pulley screwed thereto. It is essential that no rotation of the pulley in relation to the gear wheel may occur, and it is as important that the gear wheel fitted to a shaft may not move in relation to the shaft. It therefore has earlier been provided a central screw, which connects the driving wheel to the shaft and a plurality of more periferially situated screws, which connect the pulley to the gear wheel.

In FR-A 2 470 308 (from which the features of the first part of claim 1 are known) a gear ring and an outer ring of a pulley are brazed to a common sheet metal wheel.

The driving wheels are commonly manufactured by means of powder metallurgy, and the material is a steel alloy. The wheels may also be forged.

It has been a desire since long to be able to produce driving wheels of the above mentioned type, which are simple in design and have low weight. It is particularly important that the driving wheels can be assembled in a simple manner by robots. It is then not possible to have too many components, such as screws, if such an assembly shall be appropriate and rapid. At the known devices a big number of screws is thus a drawback.

The problems at the known driving wheels have been solved in accordance with the present invention as defined in claim 1 and it has been provided a light driving wheel with a pulley for car engines or the like, which incorporates a gear wheel with axial, ledge-shaped teeth, intended to cooperate with the cogs of a cogged belt and a pulley attached to one side of the gear wheel and arrested to this, and which is characterized therein that the gear wheel is moulded from a plastic or similar material having a high coefficient of thermal expansion, and that a helix of steel or another material with desired coefficient of thermal expansion is embedded in the gear rim of the wheel radially inside the teeth, whereby the helix has such a strength and dimension that it determines the thermal expansion properties of the gear rim.

The driving wheel according to the invention shall be designed thus that the gear wheel at its side facing the pulley is equipped with projecting bosses intended to cooperate with recesses in the pulley for locking this against rotation relative to the gear wheel.

The hub of the gear wheel according to the invention may also be provided with a helix of steel or another material with desired coefficient of thermal expansion and of such a strength, that it can determine the thermal expansion properties of the entire hub.

As plastic material has a high coefficient of thermal expansion is it appropriate for avoiding material stresses, that the intermediate part in the gear wheel interconnecting the hub and the gear rim is provided with knees having the ability of absorbing dimensional deformations in the wheel.

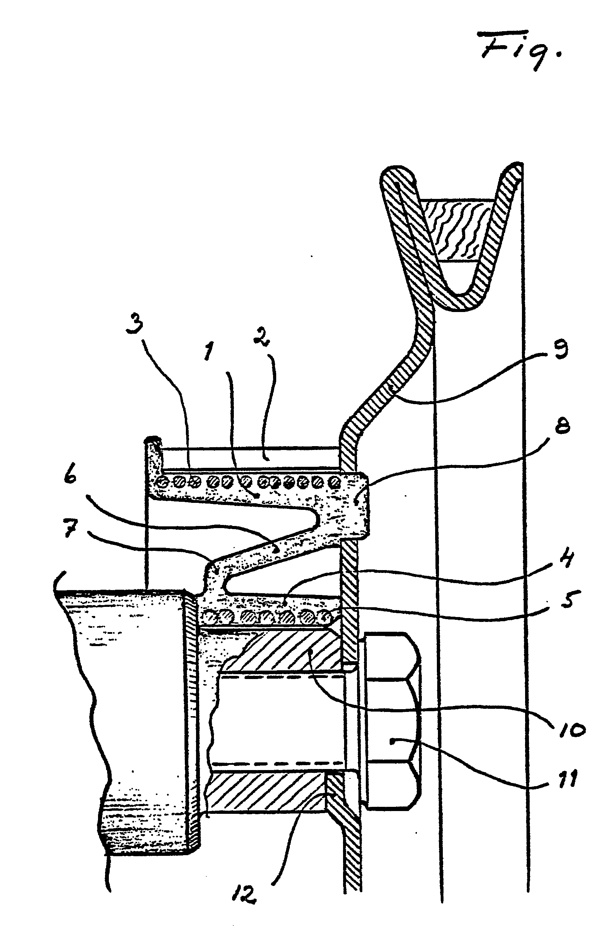

The invention hereinafter will be further described with reference to the accompanying drawing, which shows a section throug a driving wheel having a sheet metal pulley in accordance with the invention.

In the figure is shown a gear wheel having a gear rim 1 with axially extending, ledge shaped teeth 2. Inside these there is inserted a steel helix 3. This has been embedded in that it prior to the moulding of the moulding mass, which in this case is plastic material, has been inserted into a mould with somewhat smaller diameter than the helix 3, whereupon the moulding mass has been injected. The helix then will get a slight pre-tension. In order to ascertain that the teeth bottoms to the major part shall be filled with plastic material some of the teeth of the mould, e.g. each fifth tooth has been equipped with a rule, which retains the helix 3 at some distance from the teeth.

The figure further shows a hub 4 on the gear wheel, which hub 4 is also reinforced with a steel helix 5 of desired strength. Between the hub 4 and the gear rim 1 extends an intermediate portion 6. This is provided with appropriate knees 7 for compensating dimensional deformations caused by temperature changes.

A characteristic detail at the gear rim 1 is that it is provided with projecting bosses 8 of appropriate number, e.g. 4. These bosses 8 are intended to prevent rotation of the sheet metal pulley 9 in relation to the gear wheel.

As can be seen from the figure the driving wheel with sheet metal pulley has been mounted on the shaft 10 by means of one single screw or bolt 11. The sheet metal pulley can be smooth and only clamped between the shaft 10 and the bolt 11, such as shown at the upper side of the bolt, but it may also be equipped with lugs 12 entering in recesses in the shaft 10, as an additional safety device against unintentional rotation.

The hub 4 of the gear wheel may also be secured against rotation in relation to the shaft 10 in that e.g. two plane surfaces have been provided in the internal surface of the hub, which plane surfaces cooperate with corresponding surfaces on the shaft 10.

By the present invention is obtained the advantage, that it is possible to use only one screw or bolt 11 for mounting the driving wheel with pulley upon the shaft 10, at the same time as it is ascertained that there will occur no rotation of the components in relation to each other and that the thermal expansion of the gear wheel follows that of the steel, although it is primarily made of plastic or similar material having a high coefficient of thermal expansion.

If it e.g. is desired to exchange the cogged belt pulley this is also possible in that the pulley 9 is removed, whereby it is necessary to loosen only one screw 11.

**Claims**

1. A driving wheel with a belt pulley (9) for car engines or the like, incorporating a gear wheel (1–6) with axial, ledge-shaped teeth (2), intended to cooperate with the cogs of a cogged belt and a pulley (9) attached to one side of the gear wheel and arrested to this, **characterized thereby** that the gear wheel (1–6) is moulded from a plastic or similar material having a high coeffecient of thermal expansion and that a helix (3) of steel or another material with desired coefficient of thermal expansion is embedded in the gear rim (1) of the wheel radially inside the teeth (2), whereby the helix (3) has such a strength and dimension that it determines the thermal expansion properties of the gear rim (1).

2. The driving wheel as claimed in claim 1, **characterized thereby** that the gear wheel (1–6) at its side facing the pulley (9) is equipped with projecting bosses (8) intended to cooperate with recesses in the pulley (9) for locking this against rotation relative to the gear wheel.

3. The driving wheel as claimed in claim 1 or 2, **characterized thereby** that also the hub (4) of the gear wheel is provided with a helix (5) of steel or another material with desired coefficient of thermal expansion and of such a strength, that it can determine the thermal expansion properties of the entire hub (4).

4. The driving wheel as claimed in claims 1 - 3, **characterized thereby** that the intermediate part (6) in the gear wheel, interconnecting the hub (4) and the gear rim (1), is provided with knees (7) having the ability of absorbing dimensional deformations in the wheel.

**Revendications**

1. Roue motrice avec poulie pour courroie (9) pour moteur de voitures ou similaires, comprenant une roue dentée (1–6) avec dents (2) en forme de méplats disposées axialement et une poulie (9) montée sur l'un des côtés de la roue dentée et fixée à celle-ci, caractérisée en ce que, la roue dentée (1–6) est faite en une matière plastique ou similaire moulée, ayant un coefficient de dilatation thermique élevé, et en ce qu'une hélice (3) en acier ou en une autre matière avec coefficient de dilatation thermique désiré est noyée dans la jante (1) de la roue radialement à l'intérieur des dents (2), ladite hélice (3) ayant une résistance et une dimension telle qu'elle détermine les propriétés de dilatation thermique de la jante (1) de la roue dentée.

2. Roue motrice selon revendication 1 caractérisée en ce que la roue dentée (1–6) du côté regardant la poulie (9) est munie de bossages (8) destinés à coopérer avec des évidements dans la poulie (9) pour immobiliser celle-ci en rotation par rapport à la roue dentée.

3. Roue motrice selon revendication 1 ou 2 caractérisée en ce que le moyeu (4) de la roue dentée est aussi muni d'une hélice (5) en acier ou en une autre matière avec le coefficient de dilatation thermique désiré et d'une résistance telle qu'elle peut déterminer les propriétés de dilatation thermique du moyeu dans sa totalité (4).

4. Roue motrice selon revendications 1 à 3, caractérisée en ce que la partie intermédiaire (6) de la roue dentée reliant le moyeu (4) et la jante (1) de la roue présente des coudes (7) capables d'absorber les déformations dimensionnelles qui se produisent dans la roue.

**Patentansprüche**

1. Ein Antriebsrad mit einer Riemenscheibe (9) für Kraftwagenmotoren oder dgl., beinhaltend ein Zahnrad (1–6) mit axialen, balkenförmigen Zähnen (2), die dazu dienen, mit den Zähnen eines Zahnriemens zusammenzuwirken, und einer Riemenscheibe (9), welche auf einer Seite des Zahnrades angefügt und mit dem Zahnrad fest verbunden ist, dadurch gekennzeichnet, daß das Zahnrad (1–6) aus einem Kunststoff oder dgl., welcher einen großen Wärmedehnungskoeffizienten aufweist, in einer Werkzeugform geformt ist und daß eine Wendel (3) aus Stahl oder einem anderen, den gewünschten Wärmedehnungskoeffizienten aufweisenden Werkstoff in dem Zahnkranz (1) des Zahnrades radial innerhalb der Zähne (2) eingebettet ist, wobei die Wendel (3) eine derartige Festigkeit und Abmessung besitzt, daß diese die thermischen Dehnungseigenschaften des Zahnkranzes (1) bestimmt.

2. Das Antriebsrad nach Anspruch 1, dadurch gekennzeichnet, daß das Zahnrad (1–6) auf seiner zur Riemenscheibe (9) weisenden Seite mit vorragenden Ansätzen (8) versehen ist, welche dazu dienen, mit Vertiefungen in der Riemenscheibe (9) zusammenzuwirken, so daß diese gegenüber relatives Drehen am Zahnrad festgehalten ist.

3. Das Antriebsrad nach Anspruch 1 oder 2, dadurch gekennzeichnet, daß auch die Nabe (4) des Zahnrades mit einer Wendel (5) aus Stahl oder einem anderen Werkstoff versehen ist, welche den gewünschten Wärmedehnungskoeffizienten und eine derartige Festigkeit aufweist, daß diese die thermischen Dehnungseigenschaften der gesamten Nabe (4) bestimmen kann.

4. Das Antriebsrad nach Anspruch 1, 2 oder 3, dadurch gekennzeichnet, daß der die Nabe (4) mit dem Zahnkranz (1) verbindende Verbindungsabschnitt (6) des Zahnrades mit Einknickungen (7), welche die Fähigkeit haben, die abmessungsmäßigen Verformungen des Zahnrades zu absorbieren, versehen ist.

*Fig.*